# EUROPEAN PATENT APPLICATION

(11) **EP 2 515 420 A2**
(43) Date of publication of application: **24.10.2012**
(21) Application number: 12164610.3
(22) Date of filing: 18.04.2012
(51) Int. Cl.: H02M 1/42

(54) **Bridgeless power factor correction circuit**

(30) Priority: 21.04.2011 CN 201110101032
(71) Applicant: Emerson Network Power, Energy Systems, North America, Inc., Lorain, OH 44052 (US)
(72) Inventor: Wang, Linhua, 518057 Shenzhen Guangdong (CN); Xu, Feng, 518057 Shenzhen Guangdong (CN); Wu, Zhixian, 518057 Shenzhen Guangdong (CN); Li, Xiangsheng, 518057 Shenzhen Guangdong (CN)
(74) Representative: Bollinghaus, Emer

(57) **Abstract**

The present invention provides a bridgeless PFC circuit. A low-frequency bridge leg includes two diodes connected in series: a first diode and a second diode; a three-port network includes a switch tube and an inductor, and the low-frequency bridge leg and the three-port network act together to realize PFC; a lightning and surge protection bridge leg includes two diodes connected in series: a third diode and a fourth diode; a capacitor is connected between both terminals of the low-frequency bridge leg, and between both terminals of the lightning and surge protection bridge leg; a common terminal of the first and second diodes is connected to a terminal of an AC power, and a common terminal of the third and fourth diodes is connected to the other terminal of the AC power; and the three-port network has a first port and a second port with the capacitor connected therebetween, and a third port connected to the common terminal of the third and fourth diodes. By using a lightning and surge protection bridge leg including two diodes connected in series for lightning and surge protection, EMI performance can be improved, costs of the whole circuit can be lowered and efficiency can be improved.

## Description

### FIELD OF THE INVENTION

The present invention relates to the field of power factor correction technology, and in particular to a bridgeless power factor correction circuit.

### BACKGROUND OF THE INVENTION

The power factor expresses the relationship between the effective power and the total electric energy consumption (apparent power). It is defined as the ratio of the effective power to the total electric energy consumption (apparent power). The power factor may be used as a measure for the effective utilization rate of electric energy, and a larger power factor represents a higher utilization rate of electric energy.

The function of a power factor correction (PFC) circuit is to improve the power factor.

Some of the bridgeless PFC circuits in the prior art are briefly discussed below. The term "bridgeless" means no bridge rectifiers used in the circuits.

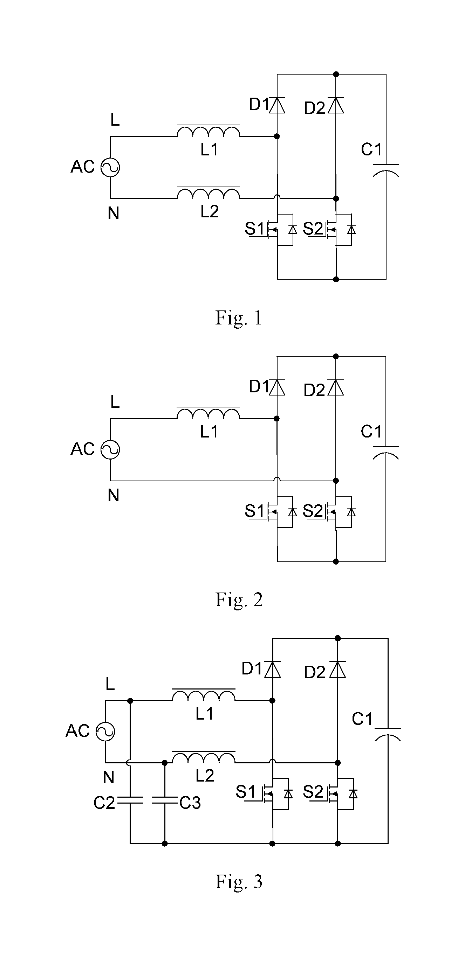

FIG 1 shows a schematic diagram of a dual-boost bridgeless PFC circuit in the prior art.

The working principle of the circuit includes: when the positive half of the alternating current (AC) wave is passed, the first inductor L1, the first diode D1, the first switch tube S1 and the body diode of the second switch tube S2 (or S2 in reverse conducting) working in standard boost mode; when the negative half of the AC wave is passed, the second inductor L2, the second diode D2, the second switch tube S2 and the body diode of the first switch tube S1 (or S1 in reverse conducting) working in standard boost mode.

Tests show that a dual-boost bridgeless PFC circuit with a single inductor as shown in FIG 2 (less of an inductor L2 as compared with FIG 1) has poor Electromagnetic interference (EMI) performance because of the connection between the high-frequency node and the live line (L line)/ neutral line (N line) for half of the cycle. In FIG 1, the additional energy-storing inductor L2 insulates the high-frequency node from the L line/N line, which may improve EMI performance to some extent, but it is still not good enough.

Common-mode noise can be reduce by adding a clamping capacitor or diode, as shown in FIG 3, a schematic diagram of a dual-boost bridgeless PFC circuit with additional clamping capacitors in the prior art.

The working principle of the circuit includes: when the positive half of the AC wave is passed, the first inductor L1, the first diode D1, the first switch tube S1, the body diode of the second switch tube S2 (or S2 in reverse conducting) and the second clamping capacitor C3 working in standard boost mode in which C3 provides a high-frequency path; when the negative half of the AC wave is passed, the second inductor L2, the second diode D2, the second switch tube S2, the body diode of the first switch tube S1 (or S1 in reverse conducting) and the first clamping capacitor C2 working in standard boost mode in which C2 provides a high-frequency path.

The technical solution shown in FIG 3 requires extra large power devices, i.e., L2, C2 and C3, which may lower the power density.

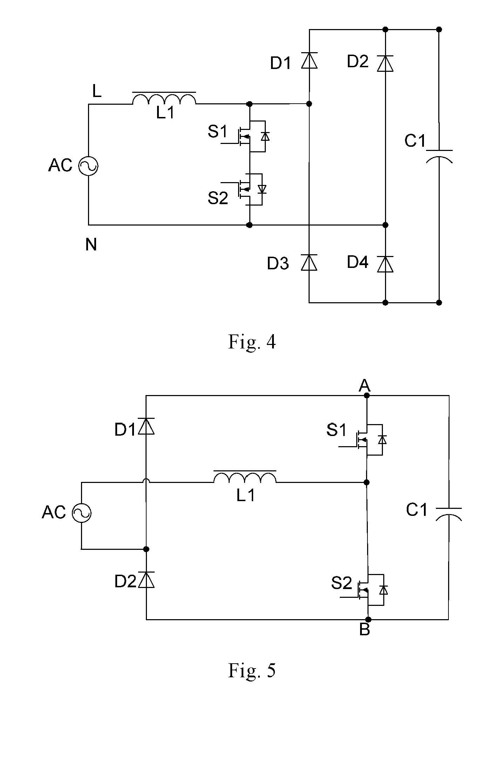

FIG 4 shows a schematic diagram of a two-way switch bridgeless PFC circuit in the prior art.

The working principle of the circuit includes: when the positive half of the AC wave is passed, the first inductor L1, the first switch tube S1, the second switch tube S2, the first diode D1 and the fourth diode D4 working in standard boost mode; when the negative half of the AC wave is passed, the first inductor L1, the first switch tube S1, the second switch tube S2, the second diode D2 and the third diode D3 working in standard boost mode.

The type of bridgeless PFC circuit shown in FIG 4 has a more stable voltage at the bus line as compared with a common bridgeless PFC circuit, and a substantially equivalent EMI performance as compared with a common bridge rectifier with standard boost. However, due to the loss in the additional metal-oxide-semiconductor field-effect transistors (MOSFETs), the efficiency is lowered.

A first capacitor C1 is connected in parallel to the output of each of the circuits shown in FIG 1-FIG 4.

As discussed above, the bridgeless PFC circuits in the prior art cannot increase efficiency and improve EMI performance at the same time.

### SUMMARY OF THE INVENTION

A technical problem to be solved by the present invention is to provide a bridgeless PFC circuit, which can increase efficiency and improve EMI performance at the same time.

According to the present invention, a bridgeless PFC circuit is provided, including: a low-frequency bridge leg, a three-port network, a lightning and surge protection bridge leg and a capacitor, wherein
the low-frequency bridge leg includes two diodes connected in series: a first diode and a second diode;
the three-port network includes a switch tube and an inductor; the low-frequency bridge leg and the three-port network act together to realize PFC;
the lightning and surge protection bridge leg includes two diodes connected in series: a third diode and a fourth diode;
the capacitor is connected between both terminals of the low-frequency bridge leg, and between both terminals of the lightning and surge protection bridge leg; a common terminal of the first and second diodes is connected to a terminal of an AC power, and a common terminal of the third and fourth diodes is connected to the other terminal of the AC power;
the three-port network has a first port and a second port with the capacitor connected therebetween, and a third port connected to the common terminal of the third and fourth diodes.

Preferably, the three-port network includes a first switch tube, a second switch tube and a first inductor;
the first switch tube and the second switch tube are connected in series, and the resulting terminals are the first and second ports of the three-port network to which both terminals of the capacitor are connected, respectively;
a common terminal of the first and second switch tubes is connected to a terminal of the first inductor, and the other terminal of the first inductor is the third port of the three-port network to which the common terminal of the third and fourth diodes is connected.

Preferably, the three-port network includes a first switch tube, a second switch tube, a third switch tube, a fourth switch tube, a first inductor and a second inductor;
the first switch tube and the second switch tube are connected in series, and the resulting terminals are the first and second ports of the three-port network to which both terminals of the capacitor are connected, respectively;
the third switch tube and the fourth switch tube are connected in series, and the resulting terminals are the first and second ports of the three-port network to which both terminals of the capacitor are connected, respectively;
a common terminal of the first and second switch tubes is connected to a terminal of the first inductor, and the other terminal of the first inductor is the third port of the three-port network to which the common terminal of the third and fourth diodes is connected;
a common terminal of the third and fourth switch tubes is connected to a terminal of the second inductor, and the other terminal of the second inductor is the third port of the three-port network to which the common terminal of the third and fourth diodes is connected.

Preferably, the three-port network includes a first switch tube, a second switch tube, a fifth diode, a sixth diode, a first inductor and a second inductor;
the first switch tube and the sixth diode are connected in series, and the resulting terminals are the first and second ports of the three-port network to which both terminals of the capacitor are connected, respectively;
the fifth diode and the second switch tube are connected in series, and the resulting terminals are the first and second ports of the three-port network to which both terminals of the capacitor are connected, respectively;
a common terminal of the fifth diode and the second switch tube is connected to a terminal of the first inductor, and the other terminal of the first inductor is the third port of the three-port network to which the common terminal of the third and fourth diodes is connected;
a common terminal of the first switch tube and the sixth diode is connected to a terminal of the second inductor, and the other terminal of the second inductor is the third port of the three-port network to which the common terminal of the third and fourth diodes is connected.

Preferably, the first diode, the second diode, the third diode and the fourth diode are integrated as a bridge rectifier module.

Preferably, the first diode and the second diode are rectifier diodes.

Preferably, the third diode and the fourth diode are rectifier diodes.

Preferably, the switch tubes are GaN or SiC based MOSFETs.

Preferably, the first inductor and the second inductor are two inductors independent with each other, or two inductors that are coupled.

In comparison with the prior art, the present invention has the following advantages.

By using a lightning and surge protection bridge leg including two diodes connected in series for lightning and surge protection, the bridgeless PFC circuit according to the present invention may improve EMI performance as compared with the bridgeless PFC circuit shown in FIG 1; and, due to the reduction in the number of high-frequency switch devices (D1 and D3) involved in power transformation, power density may be increased and costs of the whole circuit may be lowered as compared with the bridgeless PFC circuit shown in FIG 4. In addition, the circuit is not subject to loss in the additional MOSFETs, thus improving efficiency.

### BRIEF DESCRIPTION OF THE DRAWINGS

FIG 1 is a schematic diagram of a bridgeless PFC circuit in the prior art;

FIG 2 is a schematic diagram of another bridgeless PFC circuit in the prior art;

FIG 3 is a schematic diagram of a bridgeless PFC circuit with additional clamping capacitors in the prior art;

FIG 4 is a schematic diagram of a two-way switch bridgeless PFC circuit in the prior art;

FIG 5 is a schematic diagram of a bridgeless PFC circuit in the prior art;

FIG 6 illustrates a lightning and surge protection path in the circuit shown in FIG 5 when S2 is off in the positive half of the input;

FIG 7 illustrates a lightning and surge protection path in the circuit shown in FIG 5 when S2 is on in the positive half of the input;

FIG 8 illustrates a lightning and surge protection path in the circuit shown in FIG 5 when S2 is off in the negative half of the input;

FIG 9 illustrates a lightning and surge protection path in the circuit shown in FIG 5 when S2 is on in the negative half of the input;

FIG 10 is a schematic diagram of a bridgeless PFC circuit according to a first embodiment of the present invention;

FIG 11 is a schematic diagram of a bridgeless PFC circuit according to a second embodiment of the present invention;

FIG 12 is a schematic diagram of a bridge rectifier stack;

FIG 13 illustrates a lightning and surge protection path in the positive half of the input corresponding to FIG 11;

FIG 14 illustrates a lightning and surge protection path in the negative half of the input corresponding to FIG 11;

FIG 15 is a schematic diagram of a bridgeless PFC circuit according to a third embodiment of the present invention;

FIG 16 is a schematic diagram of a bridgeless PFC circuit according to a fourth embodiment of the present invention.

### DETAILED DESCRIPTION OF THE INVENTION

For better understanding of the technical solution of the present invention, a bridgeless PFC circuit in the prior art are described at first below.

FIG 5 shows a schematic diagram of a bridgeless PFC circuit in the prior art.

The bridgeless PFC circuit includes a high-frequency bridge leg and a low-frequency bridge leg. The high-frequency bridge leg includes a first switch tube S1 and a second switch tube S2 connected in series. The low-frequency bridge leg includes a first diode D1 and a second diode D2 connected in series.

Both the low-frequency bridge leg and the high-frequency bridge leg have their terminals connected in parallel to the terminals of a capacitor C1.

The common terminal of the first diode D1 and the second diode D2 are connected to a terminal of the AC power; and the common terminal of the first switch tube S1 and the second switch tube S2 are connected to the other terminal of the AC power via a first inductor L1.

In the bridgeless PFC circuit shown in FIG 5, the level at point B is clamped always at the input N line during the positive half of the input wave, the level at point A is clamped always at the input N line during the negative half of the input wave, thus eliminating high-frequency voltage jumps between the bus line and the ground, and reducing the common-mode noise due to coupling capacitances between point A and the ground and point B and the ground. In addition, since the number of power devices during the on and off of the MOSFETs are reduced, the efficiency of the whole circuit and the power density are improved.

However, the circuit shown in FIG 5 lacks of lightning and surge protection measure; hence the power devices may be damaged in case of lightning or electrical surges.

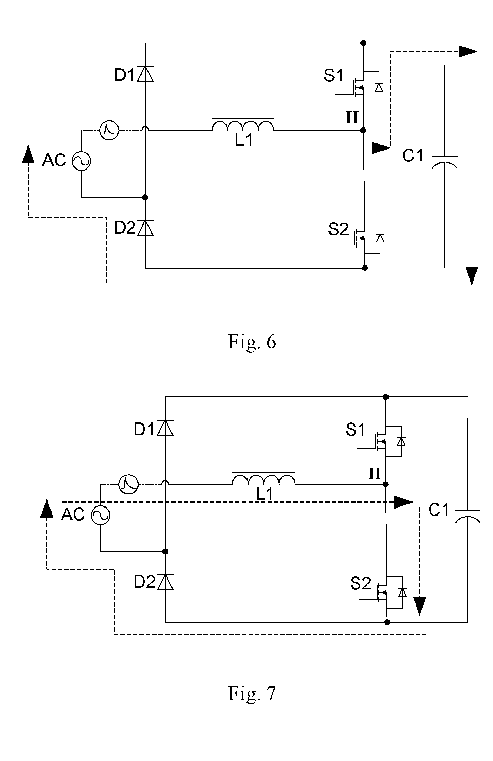

FIG 6 illustrates a lightning and surge protection path in the circuit shown in FIG 5 when S2 is off in the positive half of the input. In case of lightning or electrical surges, the voltage or current through point H may excess a rated value of the voltage or current of S1 or S2, and thus cause damages.

FIG 7 illustrates a lightning and surge protection path in the circuit shown in FIG 5 when S2 is on in the positive half of the input. In case of lightning or electrical surges, the voltage or current through point H may excess a rated value of the voltage or current of S1 or S2, and thus cause damages.

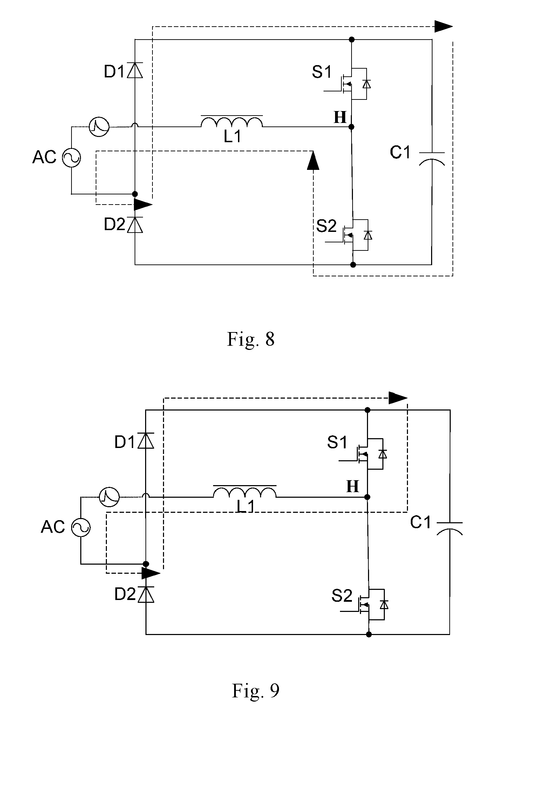

FIG 8 illustrates a lightning and surge protection path in the circuit shown in FIG 5 when S1 is off in the negative half of the input. In case of lightning or electrical surges, the voltage or current through point H may excess a rated value of the voltage or current of S1 or S2, and thus cause damages.

FIG 9 illustrates a lightning and surge protection path in the circuit shown in FIG 5 when S1 is on in the negative half of the input. In case of lightning or electrical surges, the voltage or current through point H may excess a rated value of the voltage or current of S1 or S2, and thus cause damages.

In view of the drawbacks of the bridgeless PFC circuit shown in FIG 5, the present invention provides a lightning and surge protection path. The above objects, characteristics and advantages of the present invention will become more apparent when read in conjunction with the description below of the embodiments of the present invention and the accompanying drawings.

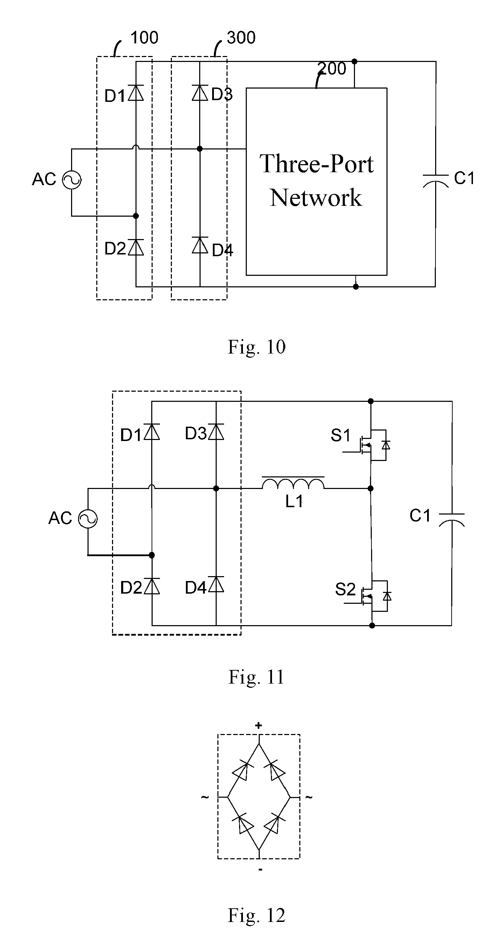

FIG 10 is a schematic diagram of a bridgeless PFC circuit according to a first embodiment of the present invention.

A bridgeless PFC circuit according to this embodiment includes: a low-frequency bridge leg 100, a three-port network 200, a lightning and surge protection bridge leg 300 and a capacitor C1.

The low-frequency bridge leg 100 includes two diodes connected in series: a first diode D1 and a second diode D2.

The three-port network 200 includes a switch tube and an inductor; and the low-frequency bridge leg 100 and the three-port network 200 act together to realize PFC.

The lightning and surge protection bridge leg 300 includes two diodes connected in series: a third diode D3 and a fourth diode D4.

The capacitor 100 is connected between both terminals of the low-frequency bridge leg 100, and between both terminals of the lightning and surge protection bridge leg 300. A common terminal of the first diode D1 and the second diode D2 is connected to a terminal of an AC power, and a common terminal of the third diode D3 and the fourth diode D4 is connected to the other terminal of the AC power.

The three-port network 200 has a first port and a second port with the capacitor C1 connected therebetween, and a third port connected to the common terminal of the third diode D3 and fourth diode D4.

By using a lightning and surge protection bridge leg including two diodes connected in series for lightning and surge protection, the bridgeless PFC circuit according to the present invention can improve EMI performance as compared with the bridgeless PFC circuit shown in FIG 1; and, due to the reduction in the number of high-frequency switch devices (D1 and D3) involved in power transformation, power density can be increased and costs of the whole circuit may be lowered as compared with the bridgeless PFC circuit shown in FIG 4. In addition, the circuit is not subject to loss in the additional MOSFETs, thus improving efficiency.

The implementation of the bridgeless PFC circuit according to the present invention will be described hereinafter in conjunction with specific embodiments. The difference between the embodiments below lies in the structure of the three-port network.

FIG 11 is a schematic diagram of a bridgeless PFC circuit according to a second embodiment of the present invention.

As compared with the one shown in FIG 10, the bridgeless PFC circuit according to this embodiment provides a specific three-port network, which acts together with the low-frequency bridge leg to realize the function of PFC.

The three-port network according to the embodiment includes a first switch tube S1, a second switch tube S2 and a first inductor L1.

The first switch tube S1 and the second switch tube S2 are connected in series, and the resulting terminals are the first and second ports of the three-port network to which both terminals of the capacitor C1 are connected, respectively.

A common terminal of the first switch tube S1 and the second switch tube S2 is connected to a terminal of the first inductor L1, and the other terminal of the first inductor is the third port of the three-port network to which the common terminal of the third diode D3 and the fourth diode D4 is connected.

The low-frequency bridge leg and the lightning and surge protection bridge leg provided by the embodiment may be integrated and implemented as a bridge rectifier module, e.g., the bridge rectifier stack shown in FIG 12. Thus the layout of the devices in the module can be optimized and compacted.

The working principle of the bridgeless PFC circuit according to the embodiment is described below with reference to the accompanying drawings.

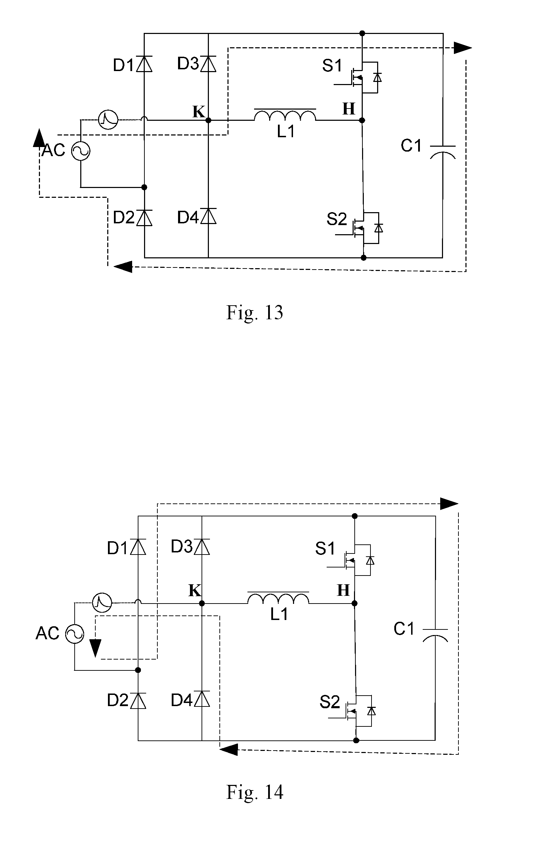

FIG 13 illustrates a lightning and surge protection path in the positive half of the input corresponding to FIG 11.

When the positive half of the AC wave is passed, the first inductor L1, the body diode of the first switch tube S1, the second switch tube S2 and the second diode D2 work in standard boost mode.

The corresponding lightning and surge path is: AC-D3-C1-D2-AC. In case of electrical surges, because D2 and D3 are on, the voltage at point K is clamped by the large capacitor C1 without much fluctuation, thus preventing much fluctuation at point H and protecting S1 and S2 from damages. In case of lightning, because D2 and D3 are on, there will not be a high current pulse caused by lightning flowing through S1 and S2 because of the high-frequency low-resistance loop provided by the large capacitor C1, thus protecting S1 and S2 from damages.

FIG 14 illustrates a lightning and surge path in the negative half of the input corresponding to FIG 11.

When the negative half of the AC wave is passed, the first inductor L1, the body diode of the second switch tube S2, the first switch tube S1 and the first diode D1 work in standard boost mode.

The corresponding lightning and surge path is: AC-D1-C1-D4-AC. In case of electrical surges, because D1 and D4 are on, the voltage at point K is clamped by the large capacitor C1 without much fluctuation, thus preventing much fluctuation at point H and protecting S1 and S2 from damages. In case of lightning, because D1 and D4 are on, there will not be a high current pulse caused by lightning flowing through S1 and S2 because of the high-frequency low-resistance loop provided by the large capacitor C1, thus protecting S1 and S2 from damages.

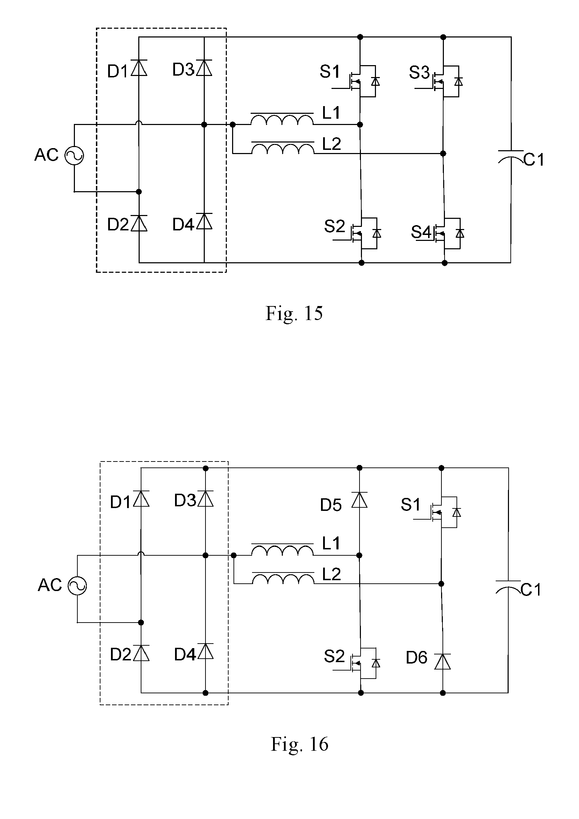

FIG 15 is a schematic diagram of a bridgeless PFC circuit according to a third embodiment of the present invention.

As compared with the one shown in FIG 11, the bridgeless PFC circuit according to this embodiment provides another type of the three-port network.

The three-port network provided by the embodiment includes a first switch tube S1, a second switch tube S2, a third switch tube S3, a fourth switch tube S4, a first inductor L1 and a second inductor L2.

The first switch tube S1 and the second switch tube S2 are connected in series, and the resulting terminals are the first and second ports of the three-port network to which both terminals of the capacitor C1 are connected, respectively.

The third switch tube S3 and the fourth switch tube S4 are connected in series, and the resulting terminals are the first and second ports of the three-port network to which both terminals of the capacitor C1 are connected, respectively.

A common terminal of the first switch tube S1 and the second switch tube S2 is connected to a terminal of the first inductor L1, and the other terminal of the first inductor L1 is the third port of the three-port network to which the common terminal of the third diode D3 and the fourth diode D4 is connected;

A common terminal of the third switch tube S3 and the fourth switch tube S4 is connected to a terminal of the second inductor L2, and the other terminal of the second inductor L2 is the third port of the three-port network to which the common terminal of the third diode D3 and the fourth diode D4 is connected.

It is noted that the first inductor L1 and the second inductor L2 may be two inductors independent with each other, or may be two inductors that are coupled.

The three-port network provided by the embodiment includes two high-frequency bridge legs and two inductors.

The working principle of the bridgeless PFC circuit according to the embodiment is described below.

When the positive half of the AC wave is passed, the first inductor L1, the body diode of the first switch tube S1, the second switch tube S2 and the second diode D2 work in standard boost mode; the second inductor L2, the body diode of the third switch tube S3, the fourth switch tube S4 and the second diode D2 work in standard boost mode; and the two boosts are controlled in a paralleling and interleaving way.

When the negative half of the AC wave is passed, the first inductor L1, the body diode of the second switch tube S2, the first switch tube S1 and the first diode D1 work in standard boost mode; the second switch inductor L2, the body diode of the fourth switch tube S4, the third switch tube S3 and the first diode D1 work in standard boost mode; and the two boost control in a paralleling and interleaving way.

FIG 16 is a schematic diagram of a bridgeless PFC circuit according to a fourth embodiment of the present invention.

As compared with the one shown in FIG 11, the bridgeless PFC circuit according to this embodiment provides another type of the three-port network.

The three-port network provided by the embodiment includes a first switch tube S1, a second switch tube S2, a fifth diode D5, a sixth diode D6, a first inductor L1 and a second inductor L2.

The first switch tube S1 and the sixth diode D6 are connected in series, and the resulting terminals are the first and second ports of the three-port network to which both terminals of the capacitor C1 are connected, respectively.

The fifth diode D5 and the second switch tube S2 are connected in series, and the resulting terminals are the first and second ports of the three-port network to which both terminals of the capacitor C1 are connected, respectively.

A common terminal of the fifth diode D5 and the second switch tube S2 is connected to a terminal of the first inductor L1, and the other terminal of the first inductor L1 is the third port of the three-port network to which the common terminal of the third diode D3 and the fourth diode D4 is connected.

A common terminal of the first switch tube S1 and the sixth diode D6 is connected to a terminal of the second inductor L2, and the other terminal of the second inductor L2 is the third port of the three-port network to which the common terminal of the third diode D3 and the fourth diode D4 is connected.

It is noted that the first inductor L1 and the second inductor L2 may be two inductors independent with each other, or may be two inductors that are coupled.

The working principle of the bridgeless PFC circuit according to the embodiment is described below.

When the positive half of the AC wave is passed, the first inductor L1, the fifth diode D5, the second switch tube S2 and the second diode D2 work in standard boost mode.

When the negative half of the AC wave is passed, the second inductor L2, the first switch tube S1, the sixth diode D6 and the first diode D1 work in standard boost mode.

Each of the bridgeless PFC circuits according to the embodiments above uses the lightning and surge protection bridge leg including a third diode and a fourth diode for lightning and surge protection. Generally, the two diodes of the lightning and surge protection bridge leg and the two diodes of the low-frequency bridge leg can be integrated together and implemented as a bridge rectifier device, thus increasing the power density of the circuit and lowering the costs.

Preferably, in all the embodiments above, the first diode and the second diode may be rectifier diodes; the third diode and the fourth diode may be rectifier diodes; and the first switch tube and the second switch tubes may be GaN or SiC based MOSFETs that have good reverse recovery performance. It is noted that the switch tubes are not limited to GaN or SiC based devices.

Preferred embodiment are described above, which shall not be interpreted as limiting the present invention in any ways. Those skilled in the art may make various modifications and alternations to the technical solution of the present invention based on the methods and technical disclosure above without deviation from the scope of the present invention. Therefore, any modification, equivalents and alternations to the embodiments above based on the technical essence of the present invention shall fall within the scope of protection of the present invention.

## Claims

1. A bridgeless power factor correction (PFC) circuit, comprising: a low-frequency bridge leg, a three-port network, a lightning and surge protection bridge leg and a capacitor, wherein
the low-frequency bridge leg comprises two diodes connected in series: a first diode and a second diode;
the three-port network comprises a switch tube and an inductor; the low-frequency bridge leg and the three-port network act together to realize PFC;
the lightning and surge protection bridge leg comprises two diodes connected in series: a third diode and a fourth diode;
the capacitor is connected between both terminals of the low-frequency bridge leg, and between both terminals of the lightning and surge protection bridge leg; a common terminal of the first and second diodes is connected to a terminal of an AC power, and a common terminal of the third and fourth diodes is connected to the other terminal of the AC power;
the three-port network has a first port and a second port with the capacitor connected therebetween, and a third port connected to the common terminal of the third and fourth diodes.

2. The bridgeless PFC circuit according to claim 1, wherein the three-port network comprises a first switch tube, a second switch tube and a first inductor;
the first switch tube and the second switch tube are connected in series, and the resulting terminals are the first and second ports of the three-port network to which both terminals of the capacitor are connected, respectively;
a common terminal of the first and second switch tubes is connected to a terminal of the first inductor, and the other terminal of the first inductor is the third port of the three-port network to which the common terminal of the third and fourth diodes is connected.

3. The bridgeless PFC circuit according to claim 1, wherein the three-port network comprises a first switch tube, a second switch tube, a third switch tube, a fourth switch tube, a first inductor and a second inductor;
the first switch tube and the second switch tube are connected in series, and the resulting terminals are the first and second ports of the three-port network to which both terminals of the capacitor are connected, respectively;
the third switch tube and the fourth switch tube are connected in series, and the resulting terminals are the first and second ports of the three-port network to which both terminals of the capacitor are connected, respectively;
a common terminal of the first and second switch tubes is connected to a terminal of the first inductor, and the other terminal of the first inductor is the third port of the three-port network to which the common terminal of the third and fourth diodes is connected;
a common terminal of the third and fourth switch tubes is connected to a terminal of the second inductor, and the other terminal of the second inductor is the third port of the three-port network to which the common terminal of the third and fourth diodes is connected.

4. The bridgeless PFC circuit according to claim 1, wherein the three-port network comprises a first switch tube, a second switch tube, a fifth diode, a sixth diode, a first inductor and a second inductor;
the first switch tube and the sixth diode are connected in series, and the resulting terminals are the first and second ports of the three-port network to which both terminals of the capacitor are connected, respectively;
the fifth diode and the second switch tube are connected in series, and the resulting terminals are the first and second ports of the three-port network to which both terminals of the capacitor are connected, respectively;
a common terminal of the fifth diode and the second switch tube is connected to a terminal of the first inductor, and the other terminal of the first inductor is the third port of the three-port network to which the common terminal of the third and fourth diodes is connected;
a common terminal of the first switch tube and the sixth diode is connected to a terminal of the second inductor, and the other terminal of the second inductor is the third port of the three-port network to which the common terminal of the third and fourth diodes is connected.

5. The bridgeless PFC circuit according to any one of claims 1-4, wherein the first diode, the second diode, the third diode and the fourth diode are integrated as a bridge rectifier module.

6. The bridgeless PFC circuit according to claim 1, wherein the first diode and the second diode are rectifier diodes.

7. The bridgeless PFC circuit according to claim 1, wherein the third diode and the fourth diode are rectifier diodes.

8. The bridgeless PFC circuit according to claim 1, wherein the switch tubes are GaN or SiC based MOSFETs.

9. The bridgeless PFC circuit according to claim 3 or claim 4, wherein the first inductor and the second inductor are two inductors independent with each other, or two inductors that are coupled.
